# EUROPEAN PATENT SPECIFICATION

(11) **EP 2 442 201 B1**
(45) Date of publication and mention of the grant of the patent: **22.01.2020**
(21) Application number: 11172358.1
(22) Date of filing: 01.07.2011
(51) Int. Cl.: G05D 1/10

(54) **Formation flying method and system**
Formationsflugverfahren und -system
Procédé de vol en formation et système

(30) Priority: 01.07.2010 US 360671 P
(43) Date of publication of application: 18.04.2012
(73) Proprietor: Sikorsky Aircraft Corporation, Stratford, CT 06615 (US)
(72) Inventor: Sahasrabudhe, Vineet, Cheshire, Connecticut 06410 (US); Jang, Stella, Derby, 06418 (US); White, Matthew A., Milford, Connecticut 06461 (US)
(74) Representative: Schmitt-Nilson Schraud Waibel Wohlfrom Patentanwälte Partnerschaft mbB

(56) References cited:
- WO-A1-2009/045109
- US-A1- 2005 055 143
- US-A1- 2009 118 875

## Description

### BACKGROUND OF THE INVENTION

The subject matter disclosed herein relates to flight control. More specifically, the subject disclosure relates to systems and methods for control of formation flying of aircraft.

Formation flying of aircraft is a high pilot-workload activity where one or more follower aircraft attempt to maintain a desired position relative to a designated lead aircraft. Systems have been developed in an attempt to ease workload on the pilot, including systems in which there is communication between the lead aircraft and the follower aircraft. For example, the lead aircraft may be modified to emit a signal that is tracked and followed by the follower aircraft.

WO 2009/045109 discloses a method and system for dynamical sensor geometry by means of formation control of sensor carrying craft, which sensor carrying craft operate below the water surface, on the ground, at the water surface and/or in the air, are manned and/or unmanned, which sensor carrying craft are provided with one or more sensor means, which sensor means are arranged on the sensor carrying craft and/or arranged to the sensor carrying craft by means of other suitable ways, such as towed behind the craft.

The method disclosed in WO 2009/045109 A1 comprises: sensing a relative position of a leader to a follower aircraft by one or more sensors disposed at the follower aircraft; comparing the relative position to a selected relative position; determining a follower velocity of the follower aircraft necessary to move the follower aircraft to the selective relative position via a flight control computer of the follower aircraft; transforming the follower velocity into flight control inputs; and moving the follower aircraft to the selected relative position via the flight control inputs.

US 2005/0055143 A1 discloses a system for autonomously keeping an aircraft's station in a formation flight of a plurality of aircraft includes a navigation system configured to determine a position of an aircraft. A data link is configured to allow the aircraft to communicate data with at least one other aircraft in the formation flight of the plurality of aircraft. A sensor is configured to detect a presence of another aircraft within a predetermined distance of the aircraft. A processor is configured to provide control signals to the aircraft's autoflight system to keep the aircraft at a predetermined station relative to the other of the plurality of aircraft in the formation flight.

US 2009/118875 A1 discloses systems and methods that may be employed to communicate location information between two or more aerial vehicles or other types of vehicles or other entities, and/or that may be used to facilitate coordinated operations of two or more such entities. In one example, an aerial vehicle may be kept aware of one or more location (e.g., longitude, latitude, etc.) and/or flight characteristics (e.g., altitude, directional heading, airspeed, attitude, etc.) of one or more other adjacent aerial vehicles, and each such aerial vehicle may use that location information to adjust its flight path to maintain a safe sphere of empty airspace around itself.

### BRIEF DESCRIPTION OF THE INVENTION

According to one aspect of the invention, a method for directing formation flying of an aircraft includes sensing a relative position of a leader to a follower aircraft by one or more sensors disposed at the follower aircraft. The relative position is compared to a selected relative position, and a follower velocity of the follower aircraft necessary to move the follower aircraft to the selective relative position is determined via a flight control computer of the follower aircraft. The follower velocity is transformed into flight control inputs and the follower aircraft is moved to the selected relative position via the flight control inputs.

According to another aspect of the invention, a system for directing formation flying of aircraft includes one or more sensors located at a follower aircraft, the one or more sensors configured to detect data regarding a position of the follower aircraft relative to a position of a leader. A flight control computer is located at the follower aircraft and is in operable communication with the one or more sensors. The flight control computer is configured to determine a relative position between the follower aircraft and the leader, compare the relative position to a selected relative position, determine a follower velocity of the follower aircraft necessary to move the follower aircraft to the selected relative position, transform the follower velocity into flight control inputs, and direct movement of the follower aircraft to the selected relative position via the flight control inputs. These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of formation flying of aircraft;
FIG. 2 is a schematic view of another embodiment of formation flying of aircraft; and
FIG 3 is a schematic view of an embodiment of a method and system for controlling formation flying of aircraft.

The detailed description explains embodiments of the invention, together with advantages and features, by way of example with reference to the drawings.

### DETAILED DESCRIPTION OF THE INVENTION

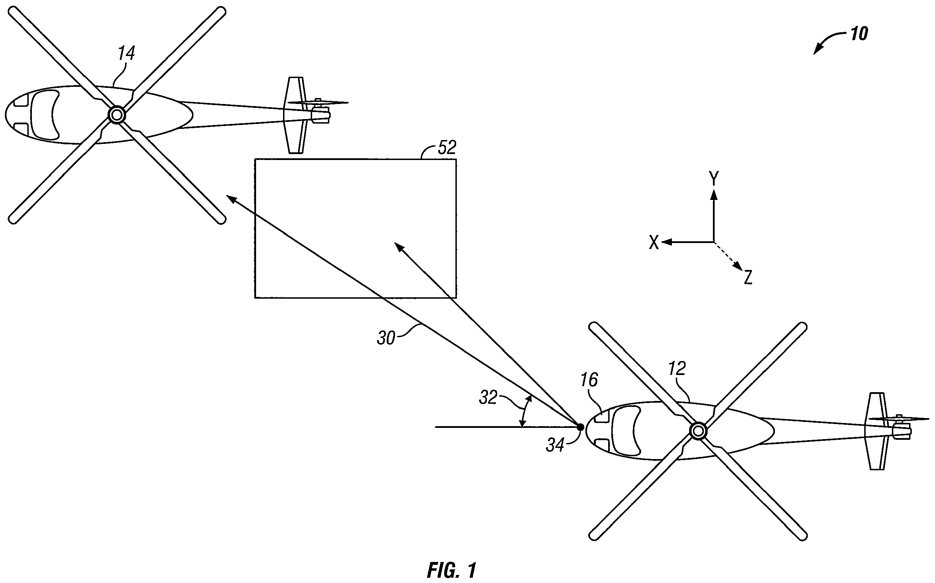

Shown in FIG. 1 is schematic representation of a self-contained, autonomous formation flying system 10. Referring to FIG. 1, the system 10 controls a position of a follower aircraft 12, for example, a helicopter, to a leader. In the embodiment shown in FIG. 1, the leader is a lead aircraft 14, but in other embodiments the leader may be another moving object, for example, a ground vehicle, a sea vehicle, or a refueling drogue.

The follower aircraft 12 includes one or more passive sensors 16. The sensors 16 of FIG. 1 are imaging sensors, specifically cameras. In other embodiments, the sensors 16 may be infared sensors, radar, sonar, lidar, global positioning sensors, or the like, or a combination of different types of sensors 16. Further, the sensors 16 may be sensors 16 already present at the follower aircraft 12 and not specifically utilized solely for the purposes described herein. For example, sensors 16 utilized may include: sandblaster sensors utilized to aide navigation through airborne particles such as sand and dust, missile detection sensors which in some cases are thermal-sensitive sensors, small arms fire sensors which in some cases are acoustic sensors, wire detection sensors, collision avoidance sensors, auto-land sensors, terrain following sensors, waypoint following sensors, or external load detection and pickup sensors.

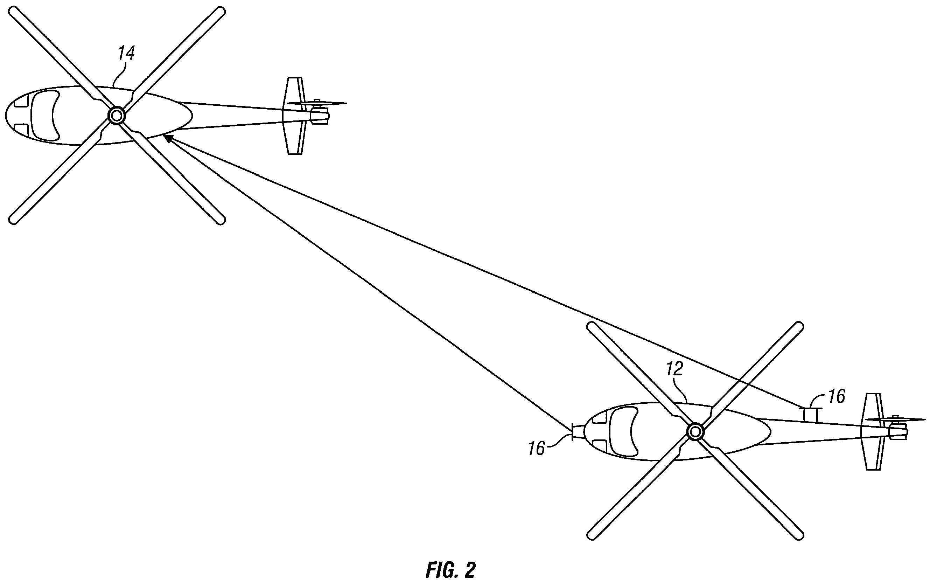

. The sensors 16 at the follower aircraft 12 obtain a relative position of the lead aircraft 14. To obtain an accurate relative position, in some embodiments it is advantageous to obtain information from more than one sensor 16 at the follower aircraft 12. Further, as shown in FIG. 2, to increase the accuracy of triangulation, it is advantageous to position the sensors 16 at points as far apart as possible at the follower aircraft 12, for example, a sensor 16 at or near a nose of the follower aircraft 12 and another sensor 16 at or near a tail of the follower aircraft 12. This arrangement is particularly advantageous with certain types of sensors 16, for example, cameras. It increases a ratio of distance between the cameras to the distance between the aircraft 12, 14, thus resulting in a more accurate determination of a distance between the aircraft 12, 14.

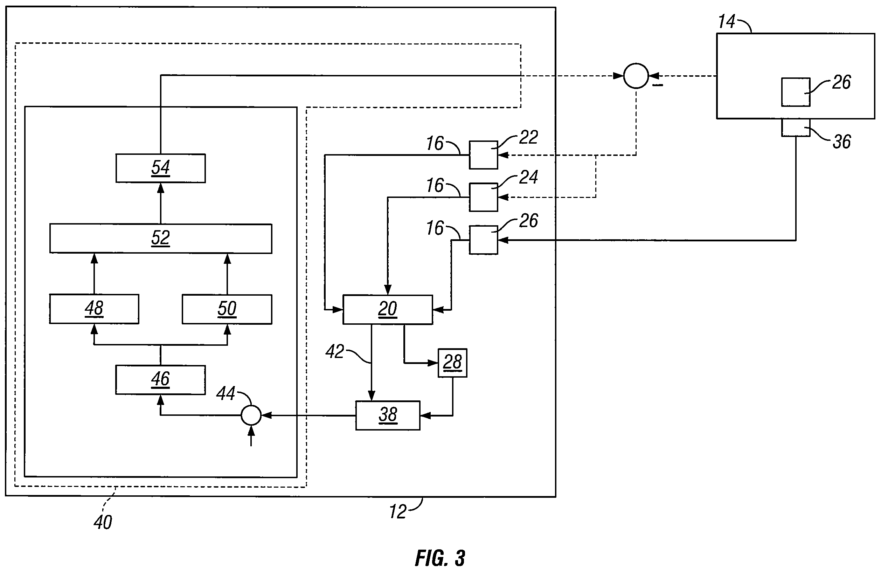

The follower aircraft 12 further includes a control system 18, shown schematically in FIG 3. The control system 18 includes a sensor fusion computer 20 that collects data from the sensors 16 and converts sensor data obtained of the lead aircraft 14 into an estimate of a position of the lead aircraft 14 relative to the follower aircraft 12. In embodiments where the sensors 16 are cameras, for example, the sensor fusion computer 20 is an image processor that converts video images of the lead aircraft 14 obtained by the cameras into the relative position.

In other embodiments, as stated above, a combination of sensor 16 types may be used. For example, some embodiments utilize a combination of video sensors 22, radar sensors 24 and global positioning sensors 26 located at the follower aircraft 12. The sensor fusion computer 20 receives visual data from the video sensors 22 and runs a visual tracking algorithm 28 to process the visual data into an estimate of relative range 30, azimuth 32, and elevation 34 (shown in FIG. 1) between the lead aircraft 14 and the follower aircraft 12. Radar sensors 24 provide relative range 30 and azimuth 32 data to the sensor fusion computer 20. Further, radar sensors 24 can track more than one target, for example, more than one lead aircraft 14. Inclusion of multiple radar sensors 24 can provide elevation 34 aw well as range 30 and azimuth 32.

Relative global positioning data and sensor data, in the form of range 30, azimuth 32 and elevation 34 is provided to the sensor fusion computer 20. Relative global positioning requires an additional global positioning sensor 26 and a datalink device 36 at the lead aircraft 14. Global positioning coordinates of the lead aircraft 14 are obtained and transmitted to the follower aircraft 12, where the relative position of the follower aircraft 12 is determined by comparing the data from the lead aircraft 14 global positioning sensor 26 to the data from the follower aircraft 12 global positioning sensor 26. A relative position 42 obtained via the various sensors is communicated through an avionics bus 38, such as a MIL-STD-1553 bus, to a flight control computer 40 of the follower aircraft 12.

The relative position 42 is compared to a selected relative position 44 at the flight control computer 40. A determination is made by the flight control computer of a magnitude of an error 46 between the relative position 42 and the selected relative position 44 and it is determined whether high gain corrective measures 48 or relatively low gain corrective measures 50 are necessary to move the follower aircraft 12 such that the relative position 44 is within an acceptable range. The necessary correction is determined and transformed into body-axis velocities vₓ, v_{y}, and v_{z} relative to the three body axes of the follower aircraft 12.

To physically change the direction of the follower aircraft 12, the flight control computer 40 converts the body and inertial axis velocities vₓ, v_{y}, and v_{z} are converted into pilot path inputs. The flight control computer 40 communicates the body axis velocities to controls in the follower aircraft 12 which may include, but are not limited to, controls for the roll stick, pitch stick, pedals, and/or throttle or collective stick. Through these inputs, the flight control computer 40 directs the follower aircraft 12 into a desired position envelope 52.

The system 10 includes safety features to avoid overaggressive inputs to change the path of the follower aircraft 12 and also means for the pilot to disengage the system if necessary. For example, in cases where the relative position 44 is a great distance away from the selected relative position 46, the flight control computer 40 might prescribe harsh corrections to the path of the follower aircraft 12 to return the follower aircraft 12 to the desired position envelope. Such harsh corrections, however, might endanger the aircraft, its crew and/or other aircraft and their crew, and/or exceed ride comfort limits of the follower aircraft 12. For this reason, the intended corrections are compared to limits at a correction limiter 54, which then limits the amount of correction available, limits specific commands such as roll, pitch, etc., and also limits the rate of such commands to preserve safety of the aircraft and nearby aircraft.

Further, the system 10 includes means for the system 10 to be disengaged. Such means may include a pilot input to a control stick of the aircraft 12, a button or switch which is activated by the pilot. Further, if the flight control system 40 determines that the path of the lead aircraft 14 is unsafe to follow, the flight control system 10 will engage the formation flying system 10.

## Claims

1. A method for directing formation flying of an aircraft comprising:
sensing a relative position of a leader (14) to a follower aircraft (12) by one or more sensors (16) disposed at the follower aircraft (12);
comparing the relative position to a selected relative position;
determine a magnitude of an error between the relative position and the selected relative position and determine whether high gain corrective measures or relatively low gain corrective measures are necessary to move the follower aircraft such that the relative position is within an acceptable range;
comparing intended corrections to limits at a correction limiter (54), which then limits an amount of correction available, limits specific commands, and limits a rate of such commands;
determining a follower velocity of the follower aircraft (12) necessary to move the follower aircraft (12) to the selected relative position via a flight control computer of the follower aircraft (12);
transforming the follower velocity into flight control inputs; and
moving the follower aircraft (12) to the selected relative position via the flight control inputs.

2. The method of Claim 1 wherein the one or more sensors (16) include one or more of video sensors, radar sensors, infrared sensors, sonar sensors, lidar sensors or global positioning sensors.

3. The method of Claim 1 or 2, further comprising:
sensing a global position of the leader (14) via a global position sensor disposed at the leader (14); and
transmitting the global position of the leader (14) to the follower aircraft (12).

4. The method of any of the preceding claims, further comprising determining the relative position of the follower aircraft (12) based on the global position of the leader (14) transmitted to the follower aircraft (12).

5. The method of any of the preceding claims, further comprising transmitting data collected from the one or more sensors (16) to a sensor fusion computer (20) to determine the relative position of the follower aircraft (12) to the leader (14).

6. The method of Claim 4 or 5, wherein determining the relative position comprises determining a relative range, azimuth and elevation.

7. The method of any of preceding claims, wherein at least one sensor (16) of the one or more sensors (16) is a video sensor.

8. The method of Claim 7, further comprising:
collecting data from the video sensor (16); and
converting images from the video sensor (16) into the relative position.

9. The method of Claim 8, further comprising converting images from the video sensor (16) into the relative position by utilizing a visual tracking algorithm.

10. A system (10) for directing formation flying of aircraft comprising:
one or more sensors (16) disposed at a follower aircraft (12), the one or more sensors (16) configured to detect data regarding a position of the follower aircraft (12) relative to a position of a leader (14);
a flight control computer disposed at the follower aircraft (12) and in operable communication with the one or more sensors (16), the flight control computer configured to:
determine a relative position between the follower aircraft (12) and the leader (14);
compare the relative position to a selected relative position;
determine a magnitude of an error between the relative position and the selected relative position and determine whether high gain corrective measures or relatively low gain corrective measures are necessary to move the follower aircraft such that the relative position is within an acceptable range;
compare intended corrections to limits at a correction limiter (54), which then limits an amount of correction available, limits specific commands, and limits a rate of such commands;
determine a follower velocity of the follower aircraft (12) necessary to move the follower aircraft (12) to the selected relative position;
transform the follower velocity into flight control inputs; and
direct movement of the follower aircraft (12) to the selected relative position via the flight control inputs.

11. The system (10) of Claim 10, wherein the one or more sensors (16) include one or more of video sensors, radar sensors, infrared sensors, sonar sensors, lidar sensors or global positioning sensors.

12. The system of Claim 10 or 11, further comprising a datalink disposed at the follower aircraft (12) to receive global position data from the leader (14).

13. The system of any of Claims 10 to 12, further comprising a sensor fusion computer (20) configured to determine the relative position of the follower aircraft (12) to the leader (14).

14. The system of Claim 13, wherein determining the relative position comprises determining a relative range, azimuth and elevation.

15. The system of any of Claims 10 to 14, wherein at least one sensor of the one or more sensors (16) is a video sensor.

## Patentansprüche

1. Verfahren zum Steuern eines Formationsflugs eines Luftfahrzeugs, umfassend:
Erfassen einer relativen Position eines Leaders (14) zu einem folgenden Luftfahrzeug (12) durch einen oder mehrere Sensoren (16), die an dem folgenden Luftfahrzeug (12) angeordnet sind;
Vergleichen der relativen Position mit einer ausgewählten relativen Position;
Bestimmen des Ausmaßes eines Fehlers zwischen der relativen Position und der ausgewählten relativen Position und Bestimmen, ob Korrekturmaßnahmen mit hoher Verstärkung oder Korrekturmaßnahmen mit relativ niedriger Verstärkung erforderlich sind, um das folgende Luftfahrzeug so zu bewegen, dass die relative Position innerhalb eines akzeptablen Bereichs liegt;
Vergleichen der beabsichtigten Korrekturen mit Beschränkungen an einer Korrekturbeschränkungsvorrichtung (54), was dann ein verfügbares Korrekturausmaß beschränkt, spezifische Befehle beschränkt und eine Rate solcher Befehle beschränkt;
Bestimmen einer Folgegeschwindigkeit des folgenden Luftfahrzeugs (12), die nötig ist, um das folgende Luftfahrzeug (12) über einen Flugsteuerungscomputer des folgenden Fahrzeugs (12) zur ausgewählten relativen Position zu bewegen;
Transformieren der Folgegeschwindigkeit in Flugsteuerungseingaben; und
Bewegen des folgenden Luftfahrzeugs (12) an die ausgewählte relative Position über Flugsteuerungseingaben.

2. Verfahren nach Anspruch 1, wobei der eine oder die mehreren Sensoren (16) einen oder mehrere Videosensoren, Radarsensoren, Infrarotsensoren, Sonarsensoren, Lidar-Sensoren oder globale Positionsbestimmungssensoren beinhalten.

3. Verfahren nach Anspruch 1 oder 2, ferner Folgendes umfassend:
Erfassen einer globalen Position des Leaders (14) über einen globalen Positionsbestimmungssensor, der an dem Leader (14) angebracht ist; und
Senden der globalen Position des Leaders (14) an das folgende Luftfahrzeug (12).

4. Verfahren nach einem der vorstehenden Ansprüche, ferner umfassend das Bestimmen der relativen Position des folgenden Luftfahrzeugs (12) basierend auf der globalen Position des Leaders (14), die an das folgende Luftfahrzeug (12) gesendet wurde.

5. Verfahren nach einem der vorstehenden Ansprüche, ferner umfassend das Senden von Daten, die anhand des einen oder der mehreren Sensoren (16) gesammelt wurden, an einen Sensorfusionscomputer (20), um die relative Position des folgenden Luftfahrzeugs (12) zum Leader (14) zu bestimmen.

6. Verfahren nach Anspruch 4 oder 5, wobei das Bestimmen der relativen Position das Bestimmen eines relativen Bereichs, Azimuts und einer Elevation umfasst.

7. Verfahren nach einem der vorstehenden Ansprüche, wobei mindestens ein Sensor (16) des einen oder der mehreren Sensoren (16) ein Videosensor ist.

8. Verfahren nach Anspruch 7, ferner Folgendes umfassend:
Sammeln von Daten von dem Videosensor (16); und
Konvertieren von Bildern von dem Videosensor (16) in die relative Position.

9. Verfahren nach Anspruch 8, ferner umfassend das Konvertieren der Bilder von dem Videosensor (16) in die relative Position durch Verwenden eines visuellen Tracking-Algorithmus.

10. System (10) zum Steuern eines Formationsflugs eines Luftfahrzeugs, umfassend:
einen oder mehrere Sensoren (16), die an einem folgenden Luftfahrzeug (12) angeordnet sind, wobei der eine oder die mehreren Sensoren (16) dazu konfiguriert sind, Daten in Bezug auf eine Position des folgenden Luftfahrzeugs (12) relativ zu einer Position eines Leaders (14) zu erkennen;
einen Flugsteuerungscomputer, der an dem folgenden Luftfahrzeug (12) angeordnet ist und in Betriebskommunikation mit dem einen oder den mehreren Sensoren (16) steht, wobei der Flugsteuerungscomputer zu Folgendem konfiguriert ist:
Bestimmen einer relativen Position zwischen dem folgenden Luftfahrzeug (12) und dem Leader (14);
Vergleichen der relativen Position mit einer ausgewählten relativen Position;
Bestimmen des Ausmaßes eines Fehlers zwischen der relativen Position und der ausgewählten relativen Position und Bestimmen, ob Korrekturmaßnahmen mit hoher Verstärkung oder Korrekturmaßnahmen mit relativ niedriger Verstärkung erforderlich sind, um das folgende Luftfahrzeug so zu bewegen, dass die relative Position innerhalb eines akzeptablen Bereichs liegt;
Vergleichen der beabsichtigten Korrekturen mit Beschränkungen an einer Korrekturbeschränkungsvorrichtung (54), was dann ein verfügbares Korrekturausmaß beschränkt, spezifische Befehle beschränkt und eine Rate solcher Befehle beschränkt;
Bestimmen einer Folgegeschwindigkeit des folgenden Luftfahrzeugs (12), die nötig ist, um das folgende Luftfahrzeug (12) zur ausgewählten relativen Position zu bewegen;
Transformieren der Folgegeschwindigkeit in Flugsteuerungseingaben; und
Steuern der Bewegung des folgenden Luftfahrzeugs (12) an die ausgewählte relative Position über die Flugsteuerungseingaben.

11. System (10) nach Anspruch 10, wobei der eine oder die mehreren Sensoren (16) einen oder mehrere Videosensoren, Radarsensoren, Infrarotsensoren, Sonarsensoren, Lidar-Sensoren oder globale Positionsbestimmungssensoren beinhalten.

12. System nach Anspruch 10 oder 11, ferner umfassend einen Datenlink, der an dem folgenden Luftfahrzeug (12) angeordnet ist, um globale Positionsbestimmungsdaten von dem Leader (14) zu empfangen.

13. System nach einem der Ansprüche 10 bis 12, ferner umfassend einen Sensorfusionscomputer (20), der dazu konfiguriert ist, die relative Position des folgenden Luftfahrzeugs (12) zum Leader (14) zu bestimmen.

14. System nach Anspruch 13, wobei das Bestimmen der relativen Position das Bestimmen eines relativen Bereichs, Azimuts und einer Elevation umfasst.

15. Verfahren nach einem der Ansprüche 10 bis 14, wobei mindestens ein Sensor des einen oder der mehreren Sensoren (16) ein Videosensor ist.

## Revendications

1. Procédé pour diriger un vol en formation d'un aéronef, comprenant :
la détection d'une position relative d'un meneur (14) par rapport à un aéronef suiveur (12) par un ou plusieurs détecteurs (16) disposés sur l'aéronef suiveur (12) ;
la comparaison de la position relative par rapport à une position relative sélectionnée ;
la détermination d'une magnitude d'une erreur entre la position relative et la position relative sélectionnée et la détermination du fait de savoir si des mesures correctives à gain élevé ou des mesures correctives à gain relativement faible sont nécessaires pour déplacer l'aéronef suiveur de sorte que la position relative se trouve dans une plage acceptable ;
la comparaison des corrections envisagées avec des limites sur un limiteur de correction (54), qui limite alors la valeur de correction disponible, limite les commandes spécifiques, et limite un taux de ces commandes ;
la détermination d'une vitesse de suiveur de l'aéronef suiveur (12) nécessaire pour déplacer l'aéronef suiveur (12) dans la position relative sélectionnée au moyen d'un ordinateur de commande de vol de l'aéronef suiveur (12) ;
la transformation de la vitesse de suiveur en entrées de commande de vol ; et
le déplacement de l'aéronef suiveur (12) dans la position relative sélectionnée au moyen des entrées de commande de vol.

2. Procédé selon la revendication 1, dans lequel les un ou plusieurs capteurs (16) comprennent un ou plusieurs capteurs vidéo, capteurs radar, capteurs à infrarouge, capteurs sonar, capteurs lidar ou capteurs GPS (positionnement global).

3. Procédé selon la revendication 1 ou 2, comprenant en outre :
la détection d'une position globale du meneur (14) au moyen d'un capteur GPS disposé sur le meneur (14) ; et
la transmission de la position globale du meneur (14) à l'aéronef suiveur (12).

4. Procédé selon l'une quelconque des revendications précédentes, comprenant en outre la détermination de la position relative de l'aéronef suiveur (12) sur la base de la position globale du meneur (14) transmise à l'aéronef suiveur (12) .

5. Procédé selon l'une quelconque des revendications précédentes, comprenant en outre la transmission des données recueillies à partir des un ou plusieurs capteurs (16) à un ordinateur de fusion de capteurs (20) pour déterminer la position relative de l'aéronef suiveur (12) par rapport au meneur (14).

6. Procédé selon la revendication 4 ou 5, dans lequel la détermination de la position relative comprend la détermination d'une plage relative, d'un azimut et d'une altitude.

7. Procédé selon l'une quelconque des revendications précédentes, dans lequel au moins un capteur (16) parmi les un ou plusieurs capteurs (16) est un capteur vidéo.

8. Procédé selon la revendication 7, comprenant en outre :
la collecte de données à partir du capteur vidéo (16) ; et
la conversion d'images du capteur vidéo (16) en position relative.

9. Procédé selon la revendication 8, comprenant en outre la conversion d'images du capteur vidéo (16) en position relative en utilisant un algorithme de suivi visuel.

10. Système (10) pour diriger un vol en formation d'un aéronef, comprenant :
un ou plusieurs capteurs (16) disposés sur un aéronef suiveur (12), les un ou plusieurs capteurs (16) étant conçus pour détecter des données concernant une position de l'aéronef suiveur (12) par rapport à une position d'un meneur (14) ;
un ordinateur de commande de vol disposé sur l'aéronef suiveur (12) et en communication fonctionnelle avec les un ou plusieurs capteurs (16), l'ordinateur de commande de vol étant conçu pour :
déterminer une position relative entre l'aéronef suiveur (12) et le meneur (14) ;
comparer la position relative avec une position relative sélectionnée ;
déterminer une magnitude d'une erreur entre la position relative et la position relative sélectionnée et déterminer si des mesures correctives à gain élevé ou des mesures correctives à gain relativement faible sont nécessaires pour déplacer l'aéronef suiveur de sorte que la position relative se trouve dans une plage acceptable ;
comparer les corrections envisagées avec des limites sur un limiteur de correction (54), qui limite alors la valeur de correction disponible, limite les commandes spécifiques, et limite un taux de ces commandes ;
déterminer une vitesse de suiveur de l'aéronef suiveur (12) nécessaire pour déplacer l'aéronef suiveur (12) dans la position relative sélectionnée ;
transformer la vitesse de suiveur en entrées de commande de vol ; et
diriger le déplacement de l'aéronef suiveur (12) dans la position relative sélectionnée au moyen des entrées de commande de vol.

11. Système (10) selon la revendication 10, dans lequel les un ou plusieurs capteurs (16) comprennent un ou plusieurs capteurs vidéo, capteurs radar, capteurs à infrarouge, capteurs sonar, capteurs lidar ou capteurs GPS (positionnement global).

12. Système selon la revendication 10 ou 11, comprenant en outre une liaison de données disposée sur l'aéronef suiveur (12) pour recevoir les données de position globale du meneur (14) .

13. Système selon l'une quelconque des revendications 10 à 12, comprenant en outre un ordinateur de fusion de capteurs (20) conçu pour déterminer la position relative de l'aéronef suiveur (12) par rapport au meneur (14).

14. Système selon la revendication 13, dans lequel la détermination de la position relative comprend la détermination d'une plage relative, d'un azimut et d'une altitude.

15. Système selon l'une quelconque des revendications 10 à 14, dans lequel au moins un capteur parmi les un ou plusieurs capteurs (16) est un capteur vidéo.
